# EUROPEAN PATENT SPECIFICATION

(11) **EP 3 745 251 B1**
(45) Date of publication and mention of the grant of the patent: **09.06.2021**
(21) Application number: 20173186.6
(22) Date of filing: 06.05.2020
(51) Int. Cl.: G06F 3/14, G09G 5/00, H04N 21/234

(54) **METHOD FOR CONTROLLING A MULTI-SCREEN SPLICING STRUCTURE HAVING DISPLAY DEVICES CAPABLE OF DISPLAYING SPECIFIC PATTERNS WHEN DETECTING PROXIMITY OF ANOTHER DISPLAY**
VERFAHREN ZUR STEUERUNG EINER MULTI-SCREEN-SPLICING-STRUKTUR MIT ANZEIGEGERÄTEN, DIE SPEZIFISCHE MUSTER ANZEIGEN KÖNNEN, WENN EINE ANDERE ANZEIGEGERÄTE IN DER NÄHE ERKANNT WIRD
PROCÉDÉ DE COMMANDE D'UNE STRUCTURE D'ÉPISSAGE À ÉCRANS MULTIPLES AYANT DES DISPOSITIFS D'AFFICHAGE CAPABLES D'AFFICHER DES MOTIFS SPÉCIFIQUES LORS DE LA DÉTECTION DE PROXIMITÉ D'UN AUTRE ÉCRAN

(30) Priority: 29.05.2019 CN 201910454639
(43) Date of publication of application: 02.12.2020
(73) Proprietor: BenQ Intelligent Technology (Shanghai) Co., Ltd, Changning District Shanghai (CN); BenQ Corporation, Taipei 114 (TW)
(72) Inventor: Chi, Chin-Jui, 334 Taoyuan City (TW); Huang, Pei-Wen, 105 Taipei City (TW); Liu, Ta-Wei, 330 Taoyuan City (TW)
(74) Representative: Straus, Alexander

(56) References cited:
- EP-A1- 2 960 768
- JP-A- 2015 232 697

## Description

### Field of the Invention

The present invention relates to a method for controlling a multi-screen splicing structure, and more particularly to a method for controlling a plurality of display devices of a multi-screen splicing structure to display patterns when detecting proximity of another display.

### Background of the Invention

Display devices have been widely used in modern society to display images and information. With the increasing number of display devices, how to splice multiple display devices together to form a larger multi-screen splicing structure to display a larger image and present more information is currently an important topic in the industry. Prior art document EP2960768 discloses a mobile terminal for sharing content with another terminal through a shared area.

### Summary of the Invention

This in mind, the present invention aims at providing a method for controlling a multi-screen splicing structure having display devices capable of displaying specific patterns when detecting proximity of another display.

This is achieved by a method according to claim 1. The dependent claim pertains to corresponding further developments and improvements.

As will be seen more clearly from the detailed description following below, the claimed method for controlling a multi-screen splicing structure is disclosed. The multi-screen splicing structure comprises a first display device and a second display device. The first display device comprises a first display panel, a first sensing module and a first control circuit. The first display panel comprises a plurality of first pixels. The first sensing module comprises a plurality of first sensors respectively disposed around the first display panel. The first control circuit is coupled to the first display panel and the first sensing module. The second display panel comprises a plurality of second pixels. The second sensing module comprises a plurality of second sensors respectively disposed around the second display panel. The second control circuit is coupled to the second display panel and the second sensing module. The method comprises when the first sensing module senses the second sensing module, the first control circuit determining that a first side of the first display panel is adjacent to the second display device and controlling a first portion of the first pixels adjacent to the first side to display a first pattern; and when the second sensing module senses the first sensing module, the second control circuit determining that a second side of the second display panel is adjacent to the first display device and controlling a second portion of the second pixels adjacent to the second side to display a second pattern.

### Brief Description of the Drawings

In the following, the invention is further illustrated by way of example, taking reference to the accompanying drawings. Thereof
FIG. 1 is a functional block diagram of a multi-screen splicing structure according to an embodiment of the present invention;
FIG. 2 is a schematic diagram of a first display device and a second display device of the multi-screen splicing structure in FIG. 1;
FIG. 3 is a flowchart of a method for controlling the multi-screen splicing structure in FIG. 1 according to an embodiment of the invention;
FIGs. 4 to 8 are other schematic diagrams of the multi-screen splicing structure in FIG. 1, respectively;
FIG. 9 is a functional block diagram of a multi-screen splicing structure according to another embodiment of the present invention; and
FIGs. 10 to 12 are schematic diagrams of the multi-screen splicing structure in FIG. 9.

### Detailed Description

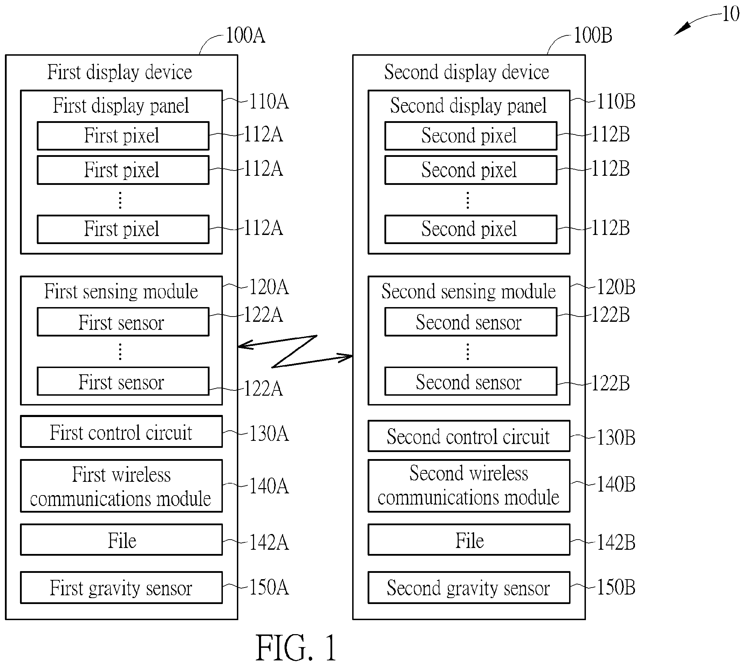

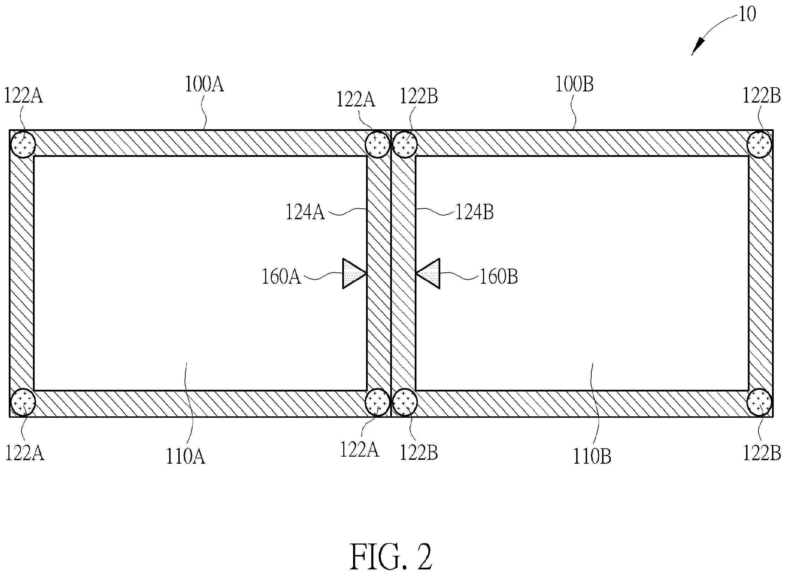

FIG. 1 is a functional block diagram of a multi-screen splicing structure 10 according to an embodiment of the present invention, and FIG. 2 is a schematic diagram of a first display device 100A and a second display device 100B of the multi-screen splicing structure 10 in FIG. 1. The multi-screen splicing structure 10 comprises a first display device 100A and a second display device 10B. The first display device 100A comprises a first display panel 110A, a first sensing module 120A, and a first control circuit 130A. The first display panel 110A comprises a plurality of first pixels 112A for displaying images. The first sensing module 120A comprises a plurality of first sensors 122A, which are respectively disposed around the first display panel 110A. Taking FIG. 2 as an example, the first sensing module 120A comprises four first sensors 122A, which are respectively disposed at four corners of the first display panel 110A. The first control circuit 130A is coupled to the first display panel 110A and the first sensing module 120A, and is configured to control the operations of the first display device 100A. The first control circuit 130A is capable of determining which side of the first display panel 110A is adjacent to the second display 100B according to the sensing states of the first sensors 122A. Similarly, the second display device 100B comprises a second display panel 110B, a second sensing module 120B, and a second control circuit 130B. The second display panel 110B comprises a plurality of second pixels 112B for displaying images. The second sensing module 120B comprises a plurality of second sensors 122B, which are respectively disposed around the second display panel 110B. The second sensors 122B can mutually sense with the plurality of first sensors 122A of the first sensing module 120A. Taking FIG. 2 as an example, the second sensing module 120B comprises four second sensors 122B, which are respectively arranged at four corners of the second display panel 110B, and are configured to mutually sense with the first sensors 122A. The second control circuit 130B is coupled to the second display panel 110B and the second sensing module 120B, and is configured to control the operations of the second display device 100B. The second control circuit 130B is capable of determining which side of the second display panel 110B is adjacent to the first display 100A according to the sensing states of the second sensors 122B.

When the first sensing module 120A senses the second sensing module 120B, the first control circuit 130A determines that the first side 124A of the first display panel 110A is adjacent to the second display device 110B according to the sensing states of the first sensors 122A, and controls a first portion of the first pixels 112A adjacent to the first side 124A to display a first pattern 160A. Similarly, when the second sensing module 120B senses the first sensing module 120A, the second control circuit 130B determines that the second side 124B of the second display panel 110B is adjacent to the first display device 100A according to the sensing states of the second sensors 122B, and controls a second portion of the second pixels 112B adjacent to the second side 124B to display a second pattern 160B. In this embodiment, the first pattern 160A and the second pattern 160B are symmetrical to each other.

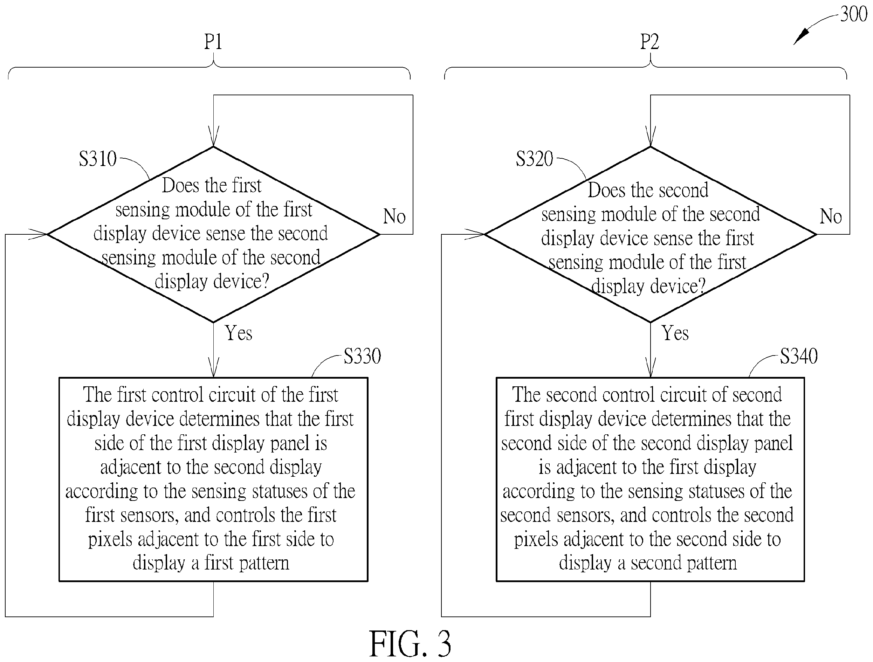

FIG. 3 is a flowchart of a method 300 for controlling the multi-screen splicing structure in FIG. 1 according to an embodiment of the invention. The method 300 comprises a first procedure P1 and a second procedure P2. The first procedure P1 is executed by the first display device 100A and the second procedure P2 is executed by the second display device 100B. Therefore, the first procedure P1 and the second procedure P2 can be performed in parallel. The first procedure P1 comprises steps S310 and S330, and the second procedure P2 comprises steps S320 and S340. For the first display device 100A, in step S310, the first control circuit 130A of the first display device 100A determines whether the first sensing module 120A senses the second sensing module 120B of the second display device 100B. Since the first control circuit 130A determines that the first sensing module 120A has sensed the second sensing module 120B of the second display device 100B, step S330 is executed. In step S330, the first control circuit 130A of the first display device 100A determines that the first side 124A of the first display panel 110A is adjacent to the second display device 100B according to the sensing states of the plurality of first sensors 122A, and controls the first portion of the first pixels 112A adjacent to the first side 124A to display the first pattern 160A. Similarly, for the second display device 100B, in step S320, the second control circuit 130B of the second display device 100B determines whether the second sensing module 120B senses the first sensing module 120A of the first display device 100A. Since the second control circuit 130B determines that the second sensing module 120B has sensed the first sensing module 120A of the first display device 100A, step S340 is executed. In step S340, the second control circuit 130B of the second display device 100B determines that the second side 124B of the second display panel 110B is adjacent to the first display device 100A according to the sensing states of the plurality of second sensors 122B, and controls the second portion of the second pixels 112B adjacent to the second side 124B to display the second pattern 160B.

In an embodiment of the present invention, when the first sensing module 120A no longer senses the second sensing module 120B, the first control circuit 130A controls the first portion of the first pixels 112A adjacent to the first side 124A to continue displaying the first pattern 160A. Similarly, when the second sensing module 120B no longer senses the first sensing module 120A, the second control circuit 130B controls the second portion of the second pixels 112B adjacent to the second side 124B to continue displaying the second pattern 160B. In this way, when the first display device 100A and the second display device 100B are temporarily separated, the user can be directed to rejoin the first side 124A of the first display device 100A with the second side 124B of the second display device 100B according to the first pattern 160A and second pattern 160B.

In another embodiment of the present invention, when the first sensing module 120A no longer senses the second sensing module 120B, the first control circuit 130A controls the first portion of the first pixels 112A adjacent to the first side 124A to stop displaying the first pattern 160A. Similarly, when the second sensing module 120B no longer senses the first sensing module 120A, the second control circuit 130B controls the second portion of the second pixels 112B adjacent to the second side 124B to stop displaying the second pattern 160B.

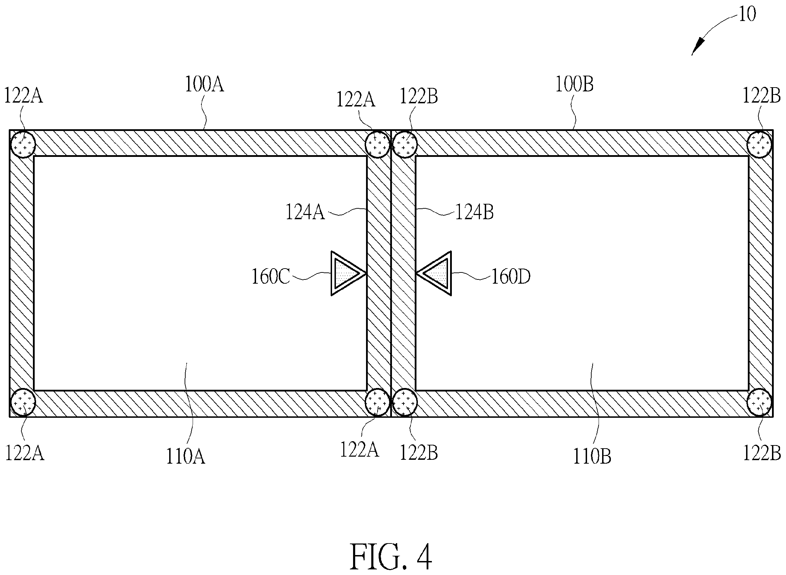

FIG. 4 is another schematic diagram of the first display device 100A and the second display device 100B of the multi-screen splicing structure 10 in FIG. 1. In an embodiment of the present invention, the first display device 100A further comprises a first wireless communications module 140A, and the second display device 100B further comprises a second wireless communications module 140B. When the first wireless communications module 140A and the second wireless communications module 140B are wirelessly connected, the first control circuit 130A controls the first portion of the first pixels 112A adjacent to the first side 124A to display a third pattern 160C, and the second control circuit 130B controls the second portion of the second pixels 112B adjacent to the second side 124B to display a fourth pattern 160D. The third pattern 160C is different from the first pattern 160A, and the fourth pattern 160D is different from the second pattern 160B. Taking FIGs. 2 and 4 as examples, the first pattern 160A and the second pattern 160A are triangles respectively, and each of the third pattern 160C and the fourth pattern 160D contains two triangles of different sizes, which are a big triangle and a small triangle enclosed by the big triangle. In addition, the first pattern 160A is displayed by the first portion of the first pixels 112A adjacent to the first side 124A when the first wireless communications module 140A and the second wireless communications module 140B are not wirelessly connected, and the second pattern 160D is displayed by the second portion of the second pixels 112B adjacent to the second side 124B when the first wireless communications module 140A and the second wireless communications module 140B are not wirelessly connected. With the first pattern 160A, the second pattern 160B, the third pattern 160C, and the fourth pattern 160D, the user can identify whether the first wireless communications module 140A and the second wireless communications module 140B are successfully wirelessly connected.

In an embodiment of the present invention, the first display panel 110A and the second display panel 110B may be touch panels. When the first pattern 160A is touched, the first control circuit 130A controls the first wireless communications module 140A to wirelessly connect to or disconnect from the second wireless communications module 140B. In detail, when a wireless connection between the first wireless communications module 140A and the second wireless communications module 140B have been established, if the first pattern 160A is touched, the first control circuit 130A controls the first wireless communications module 140A to disconnect from the second wireless communications module 140B. Contrarily, when the first wireless communications module 140A and the second wireless communications module 140B are not wirelessly connected, if the first pattern 160A is touched, the first control circuit 130A controls the first wireless communications module 140A to wirelessly connect to the second wireless communications module 140B. Similarly, for the second display device 100B, when the wireless connection between the first wireless communications module 140A and the second wireless communications module 140B have been established, if the second pattern 160B is touched, the second control circuit 130B controls the second wireless communications module 140B to disconnect from the first wireless communications module 140A. Contrarily, when the first wireless communications module 140A and the second wireless communications module 140B are not wirelessly connected, if the second pattern 160B is touched, the second control circuit 130B controls the second wireless communications module 140B to wirelessly connect to the first wireless communications module 140A.

In another embodiment of the present invention, when the first control circuit 130A determines that the first display panel 110A is adjacent to the second display panel 110B, the first control circuit 130A would trigger the first wireless communications module 140A to wirelessly connect with the second wireless communications module 140B. Similarly, when the second control circuit 130B determines that the second display panel 110B is adjacent to the first display panel 110A, the second control circuit 130B would trigger the second wireless communications module 140B to wirelessly connect with the first wireless communications module 140A.

In addition, in an embodiment of the present invention, when the first pattern 160A is touched, the first control circuit 130A would send a file 142A to the second wireless communications module 140B through the first wireless communications module 140A, and the second display device 100B would open the file 142A. Similarly, when the second pattern 160B is touched, the second control circuit 130B would send a file 142B to the first wireless communications module 140A through the second wireless communications module 140B, and the first display device 100A would open the file 142B.

In another embodiment of the present invention, when the first pattern 160A is touched, the first control circuit 130A would send an image displayed by the first display panel 110A to the second wireless communications module 140B through the first wireless communications module 140A, and the display panel 110B would display the image received by the second wireless communications module 140B. Similarly, when the second pattern 160B is touched, the second control circuit 130B would send an image displayed by the second display panel 110B to the first wireless communications module 140A through the second wireless communications module 140B, and the first display panel 110A would display the image received by the first wireless communications module 140A.

In an embodiment of the present invention, when the first wireless communications module 140A and the second wireless communications module 140B are wirelessly connected, and when the first sensing module 120A no longer senses the second sensing module 120B, the first control circuit 130A controls the first portion of the first pixels 112A adjacent to the first side 124A to continue displaying the first pattern 160A, and the second control circuit 130B controls the second portion of the second pixels 112B adjacent to the second side 124B to continue displaying the second pattern 160B. In another embodiment of the present invention, when the first wireless communications module 140A and the second wireless communications module 140B are not wirelessly connected, and when the first sensing module 120A no longer senses the second sensing module 120B, the first control circuit 130A controls the first portion of the first pixels 112A adjacent to the first side 124A to stop displaying the first pattern 160A, and the second control circuit 130B controls the second portion of the second pixels 112B adjacent to the second side 124B to stop displaying the second pattern 160B.

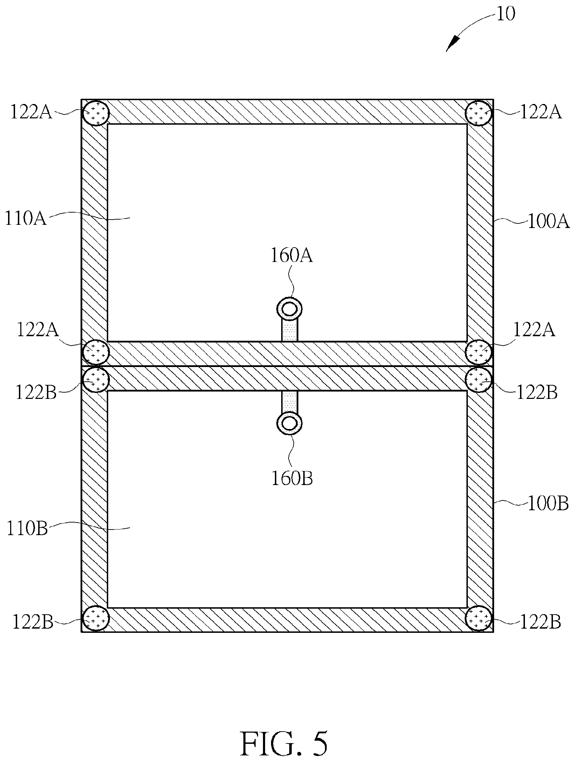

Moreover, as shown in FIGs. 2 and 4, since the first display device 100A and the second display device 100B of the multi-screen splicing structure 10 are adjacent to each other with their shorter sides, the first display device 100A and the second display device 100B are suitable for displaying images in a landscape mode. In contrast, if the first display device 100A and the second display device 100B are adjacent to each other with their longer sides, it is suitable for displaying images in a portrait mode. FIG. 5 is another schematic diagram of the first display device 100A and the second display device 100B of the multi-screen splicing structure 10 in FIG. 1. The first display device 100A and the second display device 100B are adjacent to each other with their longer sides. In addition, the first pattern 160A and the second pattern 160B shown in FIG. 5 are specific and symmetrical patterns, which are different from the first pattern 160A and the second pattern 160B that are triangular in FIG. 2.

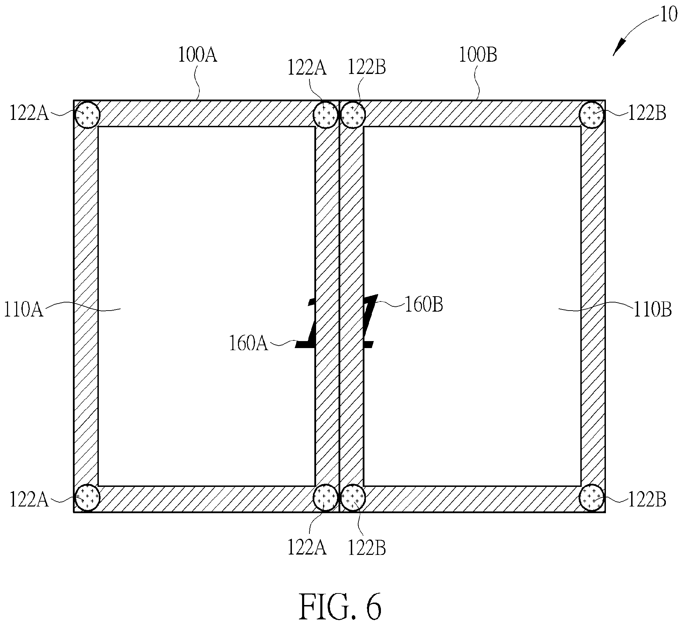

In another embodiment of the present invention, the first pattern 160A and the second pattern 160B may form a pattern of an Arabic numeral. For example, the first pattern 160A and the second pattern 160B in FIG. 6 may form an Arabic numeral "1".

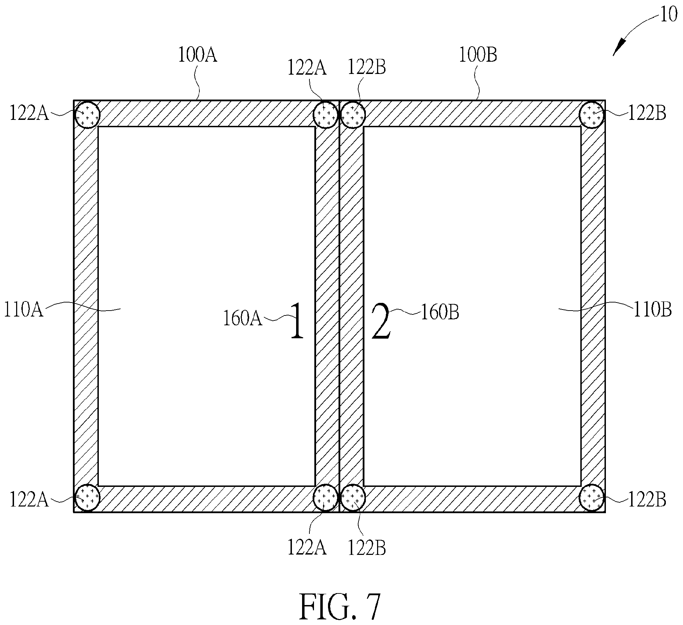

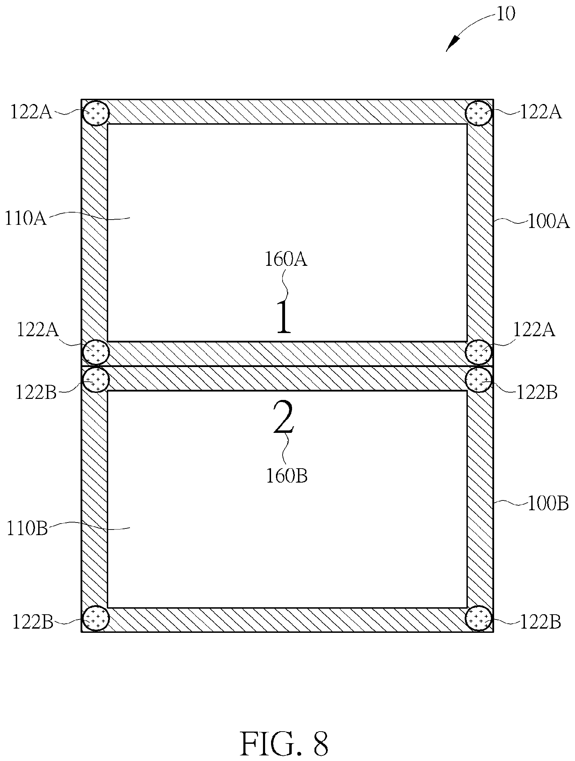

In another embodiment of the present invention, each of the first pattern 160A and the second pattern 160B may be a pattern of an Arabic numeral. For example, the first pattern 160A and the second pattern 160B in FIGs. 7 and 8 are patterns of Arabic numerals "1" and "2" respectively.

In another embodiment of the present invention, the first display device 100A further comprises a first gravity sensor (G sensor) 150A, and the second display device 100B further comprises a second gravity sensor 150B. The first control circuit 130A may determine whether the first display panel 110A is in an upright position, a horizontal position, a flat position or other setting positions according to an output signal of the first gravity sensor 150A, and control the first display panel 110A to display the first pattern 160A according to the setting position of the first display panel 110A. For example, when the multi-screen splicing structure 10 in the landscape mode (as shown in FIG. 7) is rotated 90 degrees to operate in the portrait mode (as shown in FIG. 8), the first pattern 160A shown in FIG. 7 would also be rotated 90 degrees as shown in FIG. 8. Similarly, the second control circuit 130B may determine whether the second display panel 110B is in an upright position, a horizontal position, a flat position or other setting positions according to an output signal of the second gravity sensor 150B, and control the second display panel 110B to display the second pattern 160B according to the setting position of the second display panel 110B.

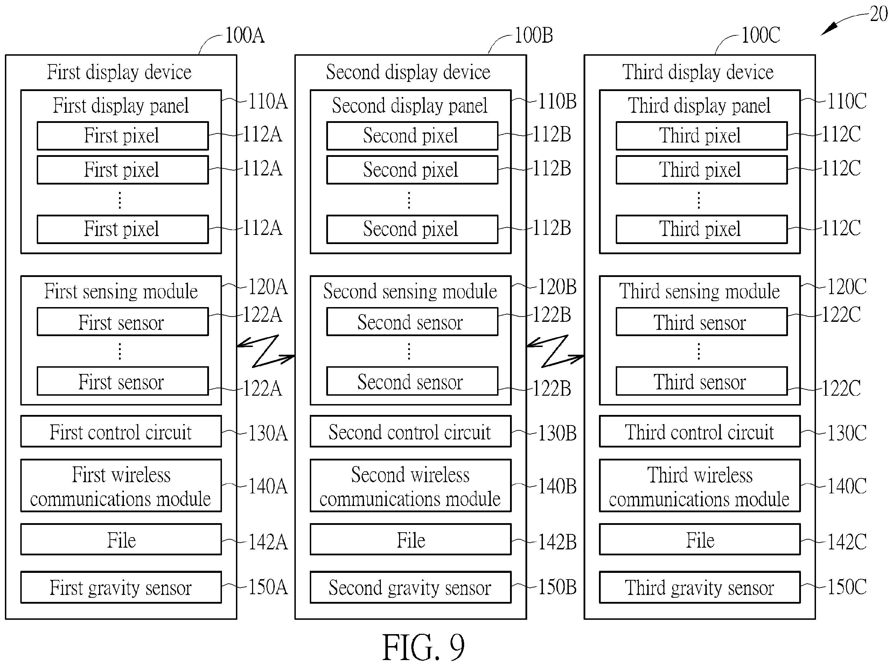

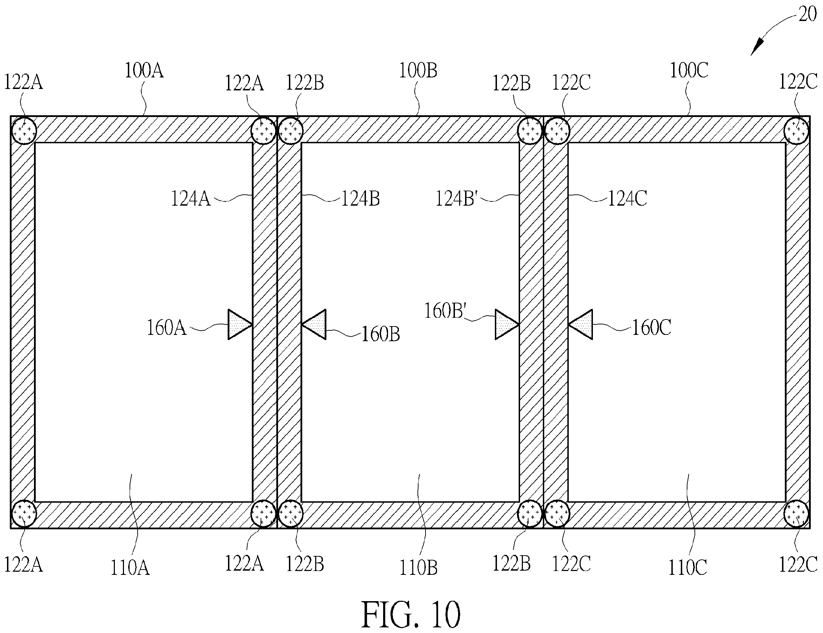

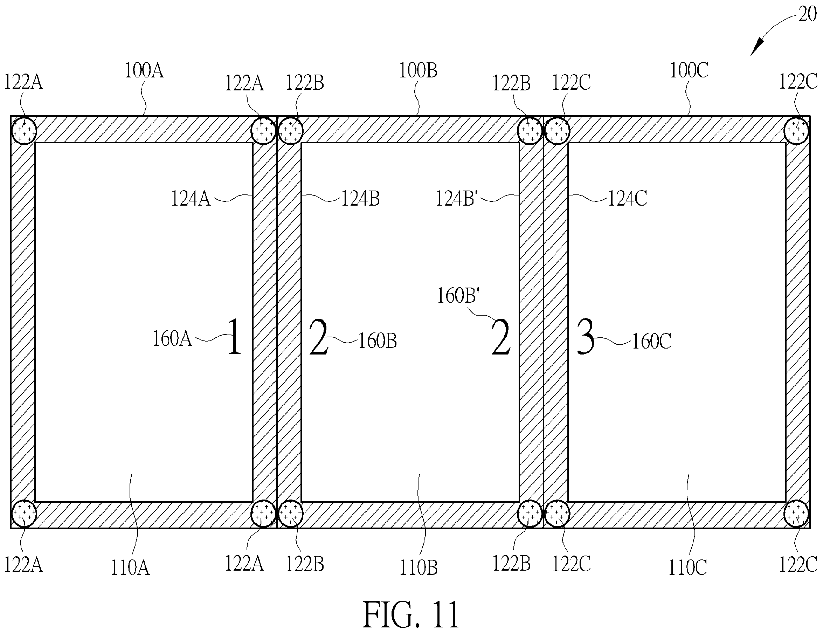

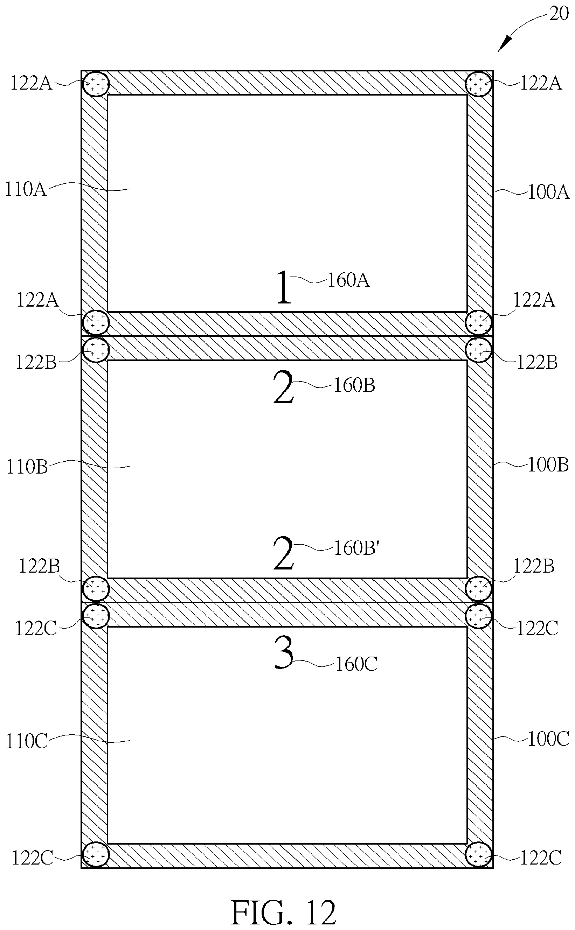

FIG. 9 is a functional block diagram of a multi-screen splicing structure 20 according to another embodiment of the present invention, and FIGS. 10 to 12 are schematic diagrams of the multi-screen splicing structure 20 in FIG. 9. The main difference between the multi-screen splicing structure 20 in FIG. 9 and the multi-screen splicing structure 10 in FIG. 1 is that the multi-screen splicing structure 20 further comprises a third display device 100C. The third display device 100C comprises a third display panel 110C, a third sensing module 120C, and a third control circuit 130C. The third display panel 110C comprises a plurality of third pixels 112C for displaying images. The third sensing module 120C comprises a plurality of third sensors 122C, which are respectively arranged around the third display panel 110C and can mutually sense with the first sensors 122A or the second sensors 122B. The third control circuit 130C is coupled to the third display panel 110C and the third sensing module 120C, and is configured to control the operations of the third display device 100C. Based on the sensing states of the third sensors 122C, the third control circuit 130C is capable of determining which side of the third display panel 110C is adjacent to other displays. When the third sensing module 120C senses the second sensing module 120B, the third control circuit 130C determines that a third side 124C of the third display panel 110C is adjacent to the second display device 100B according to sensing states of the third sensors 122C, and controls a third portion of the third pixels 112A adjacent to the third side 124C to display a third pattern 160C. Similarly, when the second sensing module 120B senses the third sensing module 120C, the second control circuit 130B determines that a fourth side 124B' of the second display panel 110B is adjacent to the third display device 100C according to the sensing states of the second sensors 122B, and controls a fourth portion of the second pixels 112B adjacent to the fourth side 124B' to display a fourth pattern 160B'. The second side 124B and the fourth side 124B' are opposite sides of the second display panel 110B. The third pattern 160C and the fourth pattern 160B' may be symmetrical patterns. For example, in FIG. 10, the third pattern 160C and the fourth pattern 160B' are two symmetrical triangles. In addition, the first pattern 160A, the second pattern 160B, and the third pattern 160C can be consecutive Arabic numeral patterns, as shown in FIGs. 11 and 12.

In an embodiment of the present invention, the third display device 100C may further comprise a third wireless communications module 140C, whose operation principle and method are similar to those of the first wireless communications module 140A and the second wireless communications module 140B (e.g., the third control circuit 130C would send a file 142C to the first wireless communications module 140A and/or the second wireless communications module 140B through the third wireless communications module 140C), so it will not be repeated here. In addition, in an embodiment of the present invention, the third display device 100C may further comprise a third gravity sensor 150C, and its operation principle and method are similar to those of the first gravity sensor 150A and the second gravity sensor 150B, so it will not be repeated.

In summary, when the control circuit detects the proximity of another display device according to the sensors of the sensing module, the pixels of the display panel adjacent to the other display device would display a corresponding pattern. Accordingly, the user may splice the display devices of the multi-screen splicing structure (e.g., a splicing sequence, wireless connection states, etc.) according to the patterns displayed on the display panels of the multi-screen splicing structure.

## Claims

1. A method (300) for controlling a multi-screen splicing structure (10), the multi-screen splicing structure (10) comprising:
a first display device (100A), comprising:
a first display panel (110A) comprising a plurality of first pixels (112A);
a first sensing module (120A) comprising a plurality of first sensors (122A) respectively disposed around the first display panel (110A); and
a first control circuit (130A) coupled to the first display panel (110A) and the first sensing module (120A); and
a second display device (100B), comprising:
a second display panel (110B) comprising a plurality of second pixels (112B);
a second sensing module (120B) comprising a plurality of second sensors (122B) respectively disposed around the second display panel (110B); and
a second control circuit (130B) coupled to the second display panel (110B) and the second sensing module (120B); and
the method (300) comprising:
when the first sensing module (120A) senses the second sensing module (120B), the first control circuit (130A) determining that a first side (124A) of the first display panel (110A) is adjacent to the second display device (100B) and controlling a first portion of the first pixels (112A) adjacent to the first side (124A) to display a first pattern (160A); and
when the second sensing module (120B) senses the first sensing module (120A), the second control circuit (130B) determining that a second side (124B) of the second display panel (110B) is adjacent to the first display device (100A) and controlling a second portion of the second pixels (112B) adjacent to the second side (124B) to display a second pattern (160B);
**characterized by** further comprising:
when the first sensing module (120A) no longer senses the second sensing module (120B), the first control circuit (130A) controlling the first portion of the first pixels (112A) adjacent to the first side (124A) to continue displaying the first pattern (160A); and
when the second sensing module (120B) no longer senses the first sensing module (120A), the second control circuit (130B) controlling the second portion of the second pixels (112B) adjacent to the second side (124B) to continue displaying the second pattern (160B).

2. The method (300) of claim 1, **characterized in that** the first pattern (160A) and the second pattern (160B) are symmetrical to each other.

3. The method (300) of claim 1, **characterized in that** the first pattern (160A) and the second pattern (160B) form a pattern of an Arabic numeral.

4. The method (300) of any of claims 1 to 3, **characterized in that** the first display device (100A) further comprises a first wireless communications module (140A), the second display device (100B) further comprises a second wireless communications module (140B), and the method (300) further comprises:
when the first wireless communications module (140A) and the second wireless communications module (140B) are wirelessly connected, the first control circuit (130A) controlling the first portion of the first pixels (112A) adjacent to the first side (124A) to display a third pattern (160C), and the second control circuit (130B) controlling the second portion of the second pixels (112B) adjacent to the second side (124B) to display a fourth pattern (160B');
wherein the first pattern (160A) is displayed by the first portion of the first pixels (112A) adjacent to the first side (124A) when the first wireless communications module (140A) and the second wireless communications module (140B) are not wirelessly connected, and the second pattern (160B) is displayed by the second portion of the second pixels (112B) adjacent to the second side (124B) when the first wireless communications module (140A) and the second wireless communications module (140B) are not wirelessly connected; and
wherein the third pattern (160C) is different from the first pattern (160A), and the fourth pattern (160B') is different from the second pattern (160B).

5. The method (300) of any of claims 1 to 3, **characterized in that** the first display panel (110A) is a touch panel, the first display device (100A) further comprises a first wireless communications module (140A), the second display device (100B) further comprises a second wireless communications module (140B), and the method (300) further comprises:
when the first pattern (160A) is touched, the first control circuit (130A) controlling the first wireless communications module (140A) to wirelessly connect to or disconnect from the second wireless communications module (140B).

6. The method (300) of any of claims 1 to 3 **characterized in that** the first display panel (110A) is a touch panel, the first display device (100A) further comprises a first wireless communications module (140A), the second display device (100B) further comprises a second wireless communications module (140B), and the method (300) further comprises:
when the first pattern (160A) is touched, the first control circuit (130A) sending a file (142A) to the second wireless communications module (140B) through the first wireless communications module (140A), and the second display device (100B) opening the file (142A).

7. The method (300) of any of claims 1 to 3, **characterized in that** the first display panel (110A) is a touch panel, the first display device (100A) further comprises a first wireless communications module (140A), the second display device (100B) further comprises a second wireless communications module (140B), and the method (300) further comprises:
when the first pattern (160A) is touched, the first control circuit (130A) sending an image to the second wireless communications module (140B) through the first wireless communications module (140A), and the second display panel (110B) displaying the image.

8. The method (300) of any of claims 1 to 3, **characterized in that** the first display panel (110A) is a touch panel, the first display device (100A) further comprises a first wireless communications module (140A), the second display device (100B) further comprises a second wireless communications module (140B), and the method (300) further comprises:
when the first control circuit (130A) determines that the first display panel (110A) is adjacent to the second display panel (110B), the first control circuit (130A) enabling the first wireless communications module (140A) to wirelessly connect with the second wireless communications module (140B).

9. The method (300) of claim 8, **characterized in that** when the first wireless communications module (140A) and the second wireless communications module (140B) are wirelessly connected and the first sensing module (120A) no longer senses the second sensing module (120B), the first control circuit (130A) controls the first portion of the first pixels (112A) adjacent to the first side to continue displaying the first pattern (160A).

10. The method (300) of any of claims 1 to 9, **characterized in that** the multi-screen splicing structure (10) further comprises:
a third display device (100C) comprising:
a third display panel (110C) comprising a plurality of third pixels (112C);
a third sensing module (120C) comprising a plurality of third sensors (122C) respectively disposed around the third display panel (110C); and
a third control circuit (130C) coupled to the third display panel (110C) and the third sensing module (120C); and
the method (300) further comprises:
when the third sensing module (120C) senses the second sensing module (120B), the third control circuit (130C) determining that a third side (124C) of the third display panel (110C) is adjacent to the second display device (100B) and controlling a third portion of the third pixels (112C) adjacent to the third side (124C) to display a third pattern (160C); and
when the second sensing module (120B) senses the third sensing module (120C), the second control circuit (130B) determining that a fourth side (124B') of the second display panel (110B) is adjacent to the third display device (100C) and controlling a fourth portion of the second pixels (112B) adjacent to the fourth side (124B') to display a fourth pattern (160B').

11. The method (300) of claim 10, **characterized in that** the first pattern (160A), the second pattern (160B), and the third pattern (160A) are consecutive Arabic numeral patterns.

## Patentansprüche

1. Verfahren (300) zum Steuern einer Mehrfachbildschirm-Spleißstruktur (10), worin die Mehrfachbildschirm-Spleißstruktur (10) umfasst:
eine erste Anzeigeeinrichtung (100A), die umfasst:
ein erstes Anzeigefeld (110A), das mehrere erste Pixel (112A) umfasst;
ein erstes Erfassungsmodul (120A), das mehrere erste Sensoren (122A) umfasst, die jeweils um das erste Anzeigefeld (110A) herum angeordnet sind; und
eine erste Steuerschaltung (130A), die mit dem ersten Anzeigefeld (110A) und dem ersten Sensormodul (120A) gekoppelt ist; und
eine zweite Anzeigeeinrichtung (100B), die umfasst:
ein zweites Anzeigefeld (110B), das mehrere zweite Pixel (112B) umfasst;
ein zweites Erfassungsmodul (120B), das eine Vielzahl von zweiten Sensoren (122B) umfasst, die jeweils um das zweite Anzeigefeld (110B) herum angeordnet sind; und
eine zweite Steuerschaltung (130B), die mit dem zweiten Anzeigefeld (110B) und dem zweiten Sensormodul (120B) gekoppelt ist; und
wobei das Verfahren (300) umfasst:
wenn das erste Sensormodul (120A) das zweite Sensormodul (120B) abtastet, die erste Steuerschaltung (130A) feststellt, dass eine erste Seite (124A) des ersten Anzeigefeldes (110A) an die zweite Anzeigeeinrichtung (100B) angrenzt, und einen ersten Bereich der ersten Pixel (112A), der an die erste Seite (124A) angrenzt, steuert, ein erstes Muster (160A) anzuzeigen; und
wenn das zweite Sensormodul (120B) das erste Sensormodul (120A) abtastet, die zweite Steuerschaltung (130B) bestimmt, dass eine zweite Seite (124B) des zweiten Anzeigefeldes (110B) an die erste Anzeigeeinrichtung (100A) angrenzt, und einen zweiten Bereich der zweiten Pixel (112B) der an die zweite Seite (124B) angrenzt, steuert, ein zweites Muster (160B) anzuzeigen;
**dadurch gekennzeichnet, dass** das Verfahren ferner umfasst:
wenn das erste Sensormodul (120A) das zweite Sensormodul (120B) nicht mehr abtastet, die erste Steuerschaltung (130A) den ersten Bereich der ersten Pixel (112A) der an die erste Seite (124A) angrenzt, steuert, mit der Anzeige des ersten Musters (160A) fortzufahren; und
wenn das zweite Sensormodul (120B) das erste Sensormodul (120A) nicht mehr abtastet, die zweite Steuerschaltung (130B) den zweiten Bereich der zweiten Pixel (112B), der an die zweite Seite (124B) angrenzt, steuert, mit der Anzeige des zweiten Musters (160B) fortzufahren.

2. Verfahren (300) nach Anspruch 1, **dadurch gekennzeichnet, dass** das erste Muster (160A) und das zweite Muster (160B) symmetrisch zueinander sind.

3. Verfahren (300) nach Anspruch 1, **dadurch gekennzeichnet, dass** das erste Muster (160A) und das zweite Muster (160B) ein Muster aus einer arabischen Zahl bilden.

4. Verfahren (300) nach einem der Ansprüche 1 bis 3, **dadurch gekennzeichnet, dass** die erste Anzeigeeinrichtung (100A) ferner ein erstes Drahtlos-Kommunikationsmodul (140A) umfasst, die zweite Anzeigeeinrichtung (100B) ferner ein zweites Drahtlos-Kommunikationsmodul (140B) umfasst, und das Verfahren (300) ferner umfasst:
wenn das erste Drahtlos-Kommunikationsmodul (140A) und das zweite Drahtlos-Kommunikationsmodul (140B) drahtlos verbunden sind, die erste Steuerschaltung (130A) den ersten Bereich der ersten Pixel (112A), der an die erste Seite (124A) angrenzt, steuert, ein drittes Muster (160C) anzuzeigen, und die zweite Steuerschaltung (130B) den zweiten Bereich der zweiten Pixel (112B), der an die zweite Seite (124B) angrenzt, steuert, ein viertes Muster (160B') anzuzeigen;
wobei das erste Muster (160A) durch den ersten Bereich der ersten Pixel (112A) angezeigt wird, der der ersten Seite (124A) angrenzt, wenn das erste Drahtlos-Kommunikationsmodul (140A) und das zweite Drahtlos-Kommunikationsmodul (140B) nicht drahtlos verbunden sind, und das zweite Muster (160B) durch den zweiten Bereich der zweiten Pixel (112B) angezeigt wird, der der zweiten Seite (124B) angrenzt, wenn das erste Drahtlos-Kommunikationsmodul (140A) und das zweite Drahtlos-Kommunikationsmodul (140B) nicht drahtlos verbunden sind; und
wobei das dritte Muster (160C) von dem ersten Muster (160A) verschieden ist und das vierte Muster (160B') von dem zweiten Muster (160B) verschieden ist.

5. Verfahren (300) nach einem der Ansprüche 1 bis 3, **dadurch gekennzeichnet, dass** das erste Anzeigefeld (110A) ein Berührungsfeld ist, die erste Anzeigeeinrichtung (100A) ferner ein erstes Drahtlos-Kommunikationsmodul (140A) umfasst, die zweite Anzeigeeinrichtung (100B) ferner ein zweites Drahtlos-Kommunikationsmodul (140B) umfasst, und das Verfahren (300) ferner umfasst:
wenn das erste Muster (160A) berührt wird, die erste Steuerschaltung (130A) das erste Drahtlos-Kommunikationsmodul (140A) steuert, sich drahtlos mit dem zweiten drahtlosen Kommunikationsmodul (140B) zu verbinden oder sich von diesem zu trennen.

6. Verfahren (300) nach einem der Ansprüche 1 bis 3, **dadurch gekennzeichnet, dass** das erste Anzeigefeld (110A) ein Berührungsfeld ist, die erste Anzeigeeinrichtung (100A) ferner ein erstes Drahtlos-Kommunikationsmodul (140A) umfasst, die zweite Anzeigeeinrichtung (100B) ferner ein zweites Drahtlos-Kommunikationsmodul (140B) umfasst, und das Verfahren (300) ferner umfasst:
wenn das erste Muster (160A) berührt wird, die erste Steuerschaltung (130A) über das erste Drahtlos-Kommunikationsmodul (140A) eine Datei (142A) an das zweite Drahtlos-Kommunikationsmodul (140B) sendet, und die zweite Anzeigeeinrichtung (100B) die Datei (142A) öffnet.

7. Verfahren (300) nach einem der Ansprüche 1 bis 3, **dadurch gekennzeichnet, dass** das erste Anzeigefeld (110A) ein Berührungsfeld ist, die erste Anzeigeeinrichtung (100A) ferner ein erstes Drahtlos-Kommunikationsmodul (140A) umfasst, die zweite Anzeigeeinrichtung (100B) ferner ein zweites Drahtlos-Kommunikationsmodul (140B) umfasst, und das Verfahren (300) ferner umfasst:
wenn das erste Muster (160A) berührt wird, die erste Steuerschaltung (130A) über das erste Drahtlos-Kommunikationsmodul (140A) ein Bild an das zweite Drahtlos-Kommunikationsmodul (140B) sendet, und die zweite Anzeigeeinrichtung (110B) das Bild anzeigt.

8. Verfahren (300) nach einem der Ansprüche 1 bis 3, **dadurch gekennzeichnet, dass** das erste Anzeigefeld (110A) ein Berührungsfeld ist, die erste Anzeigeeinrichtung (100A) ferner ein erstes Drahtlos-Kommunikationsmodul (140A) umfasst, die zweite Anzeigeeinrichtung (100B) ferner ein zweites Drahtlos-Kommunikationsmodul (140B) umfasst, und das Verfahren (300) ferner umfasst:
wenn die erste Steuerschaltung (130A) feststellt, dass das erste Anzeigefeld (110A) an das zweite Anzeigefeld (110B) angrenzt, die erste Steuerschaltung (130A) das erste Drahtlos-Kommunikationsmodul (140A) aktiviert, eine drahtlose Verbindung mit dem zweiten Drahtlos-Kommunikationsmodul (140B) herzustellen.

9. Verfahren (300) nach Anspruch 8, **dadurch gekennzeichnet, dass** wenn das erste Drahtlos-Kommunikationsmodul (140A) und das zweite Drahtlos-Kommunikationsmodul (140B) drahtlos verbunden sind und das erste Sensormodul (120A) das zweite Sensormodul (120B) nicht mehr abtastet, die erste Steuerschaltung (130A) den ersten Bereich der ersten Pixel (112A), der an die erste Seite angrenzt, steuert, die Anzeige des ersten Musters (160A) fortzusetzen.

10. Verfahren (300) nach einem der Ansprüche 1 bis 9, **dadurch gekennzeichnet, dass** die Mehrfachbildschirm-Spleißstruktur (10) ferner umfasst:
eine dritte Anzeigeeinrichtung (100C), die umfasst:
ein drittes Anzeigefeld (110C), das mehrere dritte Pixel (112C) umfasst;
ein drittes Erfassungsmodul (120C), das mehrere dritte Sensoren (122C) umfasst, die jeweils um das dritte Anzeigefeld (110C) herum angeordnet sind; und
eine dritte Steuerschaltung (130C), die mit dem dritten Anzeigefeld (110C) und dem dritten Sensormodul (120C) gekoppelt ist; und
dadurch dass das Verfahren (300) ferner umfasst:
wenn das dritte Sensormodul (120C) das zweite Sensormodul (120B) abtastet, die dritte Steuerschaltung (130C) feststellt, dass eine dritte Seite (124C) des dritten Anzeigefeldes (110C) an die zweite Anzeigeeinrichtung (100B) angrenzt, und einen dritten Bereich der dritten Pixel (112C), der an die dritte Seite (124C) angrenzt, steuert, ein drittes Muster (160C) anzuzeigen; und
wenn das zweite Sensormodul (120B) das dritte Sensormodul (120C) abtastet, die zweite Steuerschaltung (130B) bestimmt, dass eine vierte Seite (124B') des zweiten Anzeigefeldes (110B) an die dritte Anzeigeeinrichtung (100C) angrenzt, und einen vierten Bereich der zweiten Pixel (112B), der an die vierte Seite (124B') angrenzt, steuert, ein viertes Muster (160B') anzuzeigen.

11. Verfahren (300) nach Anspruch 10, **dadurch gekennzeichnet, dass** das erste Muster (160A), das zweite Muster (160B) und das dritte Muster (160A) aufeinanderfolgende Muster aus arabischen Zahlen sind.

## Revendications

1. Procédé (300) de commande d'une structure d'épissage multi-écrans (10), la structure d'épissage multi-écrans (10) comprenant:
un premier dispositif d'affichage (100A), comprenant:
un premier écran d'affichage (110A) comprenant une pluralité de premiers pixels (112A);
un premier module de détection (120A) comprenant une pluralité de premiers capteurs (122A) disposés respectivement autour du premier écran d'affichage (110A); et
un premier circuit de commande (130A) couplé au premier écran d'affichage (110A) et au premier module de détection (120A); et
un deuxième dispositif d'affichage (100B), comprenant:
un deuxième écran d'affichage (110B) comprenant une pluralité de deuxièmes pixels (112B);
un deuxième module de détection (120B) comprenant une pluralité de deuxièmes capteurs (122B) disposés respectivement autour du deuxième écran d'affichage (110B); et
un deuxième circuit de commande (130B) couplé au deuxième écran d'affichage (110B) et au deuxième module de détection (120B); et
le procédé (300) comprenant:
lorsque le premier module de détection (120A) détecte le deuxième module de détection (120B), le premier circuit de commande (130A) détermine qu'un premier côté (124A) du premier écran d'affichage (110A) est adjacent au deuxième dispositif d'affichage (100B) et commande une première partie des premiers pixels (112A) adjacents au premier côté (124A) pour afficher un premier motif (160A) ; et
lorsque le deuxième module de détection (120B) détecte le premier module de détection (120A), le deuxième circuit de commande (130B) détermine qu'un deuxième côté (124B) du deuxième écran d'affichage (110B) est adjacent au premier dispositif d'affichage (100A) et commande une deuxième partie des deuxièmes pixels (112B) adjacents au deuxième côté (124B) pour afficher un deuxième motif (160B);
**caractérisé en ce qu'**il comprend en outre:
lorsque le premier module de détection (120A) ne détecte plus le deuxième module de détection (120B), le premier circuit de commande (130A) commande la première partie des premiers pixels (112A) adjacents au premier côté (124A) pour continuer à afficher le premier motif (160A); et
lorsque le deuxième module de détection (120B) ne détecte plus le premier module de détection (120A), le deuxième circuit de commande (130B) commande la deuxième partie des deuxièmes pixels (112B) adjacents au deuxième côté (124B) pour continuer à afficher le deuxième motif (160B).

2. Procédé (300) selon la revendication 1, **caractérisé en ce que** le premier motif (160A) et le deuxième motif (160B) sont symétriques l'un par rapport à l'autre.

3. Procédé (300) selon la revendication 1, **caractérisé en ce que** le premier motif (160A) et le deuxième motif (160B) forment un motif d'un chiffre arabe.

4. Procédé (300) selon l'une quelconque des revendications 1 à 3, **caractérisé en ce que** le premier dispositif d'affichage (100A) comprend en outre un premier module de communication sans fil (140A), le deuxième dispositif d'affichage (100B) comprend en outre un deuxième module de communication sans fil (140B) et le procédé (300) comprend en outre:
lorsque le premier module de communication sans fil (140A) et le deuxième module de communication sans fil (140B) sont connectés sans fil, le premier circuit de commande (130A) commande la première partie des premiers pixels (112A) adjacents au premier côté (124A) pour afficher un troisième motif (160C) et le deuxième circuit de commande (130B) commande la deuxième partie des deuxièmes pixels (112B) adjacents au deuxième côté (124B) pour afficher un quatrième motif (160B');
le premier motif (160A) étant affiché par la première partie des premiers pixels (112A) adjacents au premier côté (124A) lorsque le premier module de communication sans fil (140A) et le deuxième module de communication sans fil (140B) ne sont pas connectés sans fil et le deuxième motif (160B) étant affiché par la deuxième partie des deuxièmes pixels (112B) adjacents au deuxième côté (124B) lorsque le premier module de communication sans fil (140A) et le deuxième module de communication sans fil (140B) ne sont pas connectés sans fil; et
le troisième motif (160C) étant différent du premier motif (160A) et le quatrième motif (160B') étant différent du deuxième motif (160B).

5. Procédé (300) selon l'une quelconque des revendications 1 à 3, **caractérisé en ce que** le premier écran d'affichage (110A) est un écran tactile, le premier dispositif d'affichage (100A) comprend en outre un premier module de communication sans fil (140A), le deuxième dispositif d'affichage (100B) comprend en outre un deuxième module de communication sans fil (140B) et le procédé (300) comprend en outre:
lorsque le premier motif (160A) est effleuré, le premier circuit de commande (130A) commande le premier module de communication sans fil (140A) pour se connecter sans fil au deuxième module de communication sans fil (140B) ou pour se déconnecter de celui-ci.

6. Procédé (300) selon l'une quelconque des revendications 1 à 3, **caractérisé en ce que** le premier écran d'affichage (110A) est un écran tactile, le premier dispositif d'affichage (100A) comprend en outre un premier module de communication sans fil (140A), le deuxième dispositif d'affichage (100B) comprend en outre un deuxième module de communication sans fil (140B) et le procédé (300) comprend en outre:
lorsque le premier motif (160A) est effleuré, le premier circuit de commande (130A) envoie un fichier (142A) au deuxième module de communication sans fil (140B) par l'intermédiaire du premier module de communication sans fil (140A) et le deuxième dispositif d'affichage (100B) ouvre le fichier (142A).

7. Procédé (300) selon l'une quelconque des revendications 1 à 3, **caractérisé en ce que** le premier écran d'affichage (110A) est un écran tactile, le premier dispositif d'affichage (100A) comprend en outre un premier module de communication sans fil (140A), le deuxième dispositif d'affichage (100B) comprend en outre un deuxième module de communication sans fil (140B) et le procédé (300) comprend en outre:
lorsque le premier motif (160A) est effleuré, le premier circuit de commande (130A) envoie une image au deuxième module de communication sans fil (140B) par l'intermédiaire du premier module de communication sans fil (140A) et le deuxième écran d'affichage (110B) affiche l'image.

8. Procédé (300) selon l'une quelconque des revendications 1 à 3, **caractérisé en ce que** le premier écran d'affichage (110A) est un écran tactile, le premier dispositif d'affichage (100A) comprend en outre un premier module de communication sans fil (140A), le deuxième dispositif d'affichage (100B) comprend en outre un deuxième module de communication sans fil (140B) et le procédé (300) comprend en outre:
lorsque le premier circuit de commande (130A) détermine que le premier écran d'affichage (110A) est adjacent au deuxième écran d'affichage (110B), le premier circuit de commande (130A) permet au premier module de communication sans fil (140A) de se connecter sans fil au deuxième module de communication sans fil (140B).

9. Procédé (300) selon la revendication 8, **caractérisé en ce que**, lorsque le premier module de communication sans fil (140A) et le deuxième module de communication sans fil (140B) sont connectés sans fil et que le premier module de détection (120A) ne détecte plus le deuxième module de détection (120B), le premier circuit de commande (130A) commande la première partie des premiers pixels (112A) adjacents au premier côté pour continuer l'affichage du premier motif (160A).

10. Procédé (300) selon l'une quelconque des revendications 1 à 9, **caractérisé en ce que** la structure d'épissage multi-écrans (10) comprend en outre:
un troisième dispositif d'affichage (100C) comprenant:
un troisième écran d'affichage (110C) comprenant une pluralité de troisièmes pixels (112C);
un troisième module de détection (120C) comprenant une pluralité de troisièmes capteurs (122C) disposés respectivement autour du troisième écran d'affichage (110C); et
un troisième circuit de commande (130C) couplé au troisième écran d'affichage (110C) et au troisième module de détection (120C); et
le procédé (300) comprend en outre:
lorsque le troisième module de détection (120C) détecte le deuxième module de détection (120B), le troisième circuit de commande (130C) détermine qu'un troisième côté (124C) du troisième écran d'affichage (110C) est adjacent au deuxième dispositif d'affichage (100B) et commande une troisième partie des troisièmes pixels (112C) adjacents au troisième côté (124C) pour afficher un troisième motif (160C); et
lorsque le deuxième module de détection (120B) détecte le troisième module de détection (120C), le deuxième circuit de commande (130B) détermine qu'un quatrième côté (124B') du deuxième écran d'affichage (110B) est adjacent au troisième dispositif d'affichage (100C) et commande une quatrième partie des deuxièmes pixels (112B) adjacents au quatrième côté (124B') pour afficher un quatrième motif (160B').

11. Procédé (300) selon la revendication 10, **caractérisé en ce que** le premier motif (160A), le deuxième motif (160B) et le troisième motif (160A) sont des motifs numériques arabes consécutifs.
